# EUROPÄISCHE PATENTANMELDUNG

(11) **EP 1 852 620 A2**
(43) Veröffentlichungstag der Anmeldung: **07.11.2007**
(21) Anmeldenummer: 07007987.6
(22) Anmeldetag: 19.04.2007
(51) Int. Cl.: F16D 13/75

(54) **Reibungskupplungseinrichtung**

(30) Priorität: 04.05.2006 DE 102006020742
(71) Anmelder: LuK Lamellen und Kupplungsbau Beteiligungs KG, 77815 Bühl (DE)
(72) Erfinder: Schneider, Michael, 77815 Bühl (DE); Ahnert, Gerd, 77880 Sasbach (DE)

(57) **Zusammenfassung**

Die Erfindung betrifft eine Reibungskupplungseinrichtung mit einer Druckplatte (18), die drehfest mit einem Gehäuse, insbesondere mit einem Kupplungsdeckel, verbunden und relativ zu dem Gehäuse mit Hilfe einer Betätigungseinrichtung (50), insbesondere einer Hebelfedereinrichtung, zum Öffnen und Schließen der Reibungskupplungseinrichtung axial begrenzt verlagerbar ist, und mit einer Verschleißnachstelleinrichtung (10), die zwischen der Betätigungseinrichtung und der Druckplatte wirksam wird, wenn Verschleiß erfasst und die Reibungskupplungseinrichtung geöffnet wird. Die Reibungskupplungseinrichtung zeichnet sich dadurch aus, dass Abstützelemente (25;65) für die Druckplatte (18) so mit der Verschleißnachstelleinrichtung (10) gekoppelt sind, dass die Betätigungseinrichtung (50) beim Öffnen der Reibungskupplungseinrichtung von der Verschleißnachstelleinrichtung (10) abhebt.

## Beschreibung

Die Erfindung betrifft eine Reibungskupplungseinrichtung mit einer Druckplatte, die drehfest mit einem Gehäuse, insbesondere mit einem Kupplungsdeckel, verbunden und relativ zu dem Gehäuse mit Hilfe einer Betätigungseinrichtung, insbesondere einer Hebelfedereinrichtung, zum Öffnen und Schließen der Reibungskupplungseinrichtung axial begrenzt verlagerbar ist, und mit einer Verschleißnachstelleinrichtung, die zwischen der Betätigungseinrichtung und der Druckplatte wirksam wird, wenn Verschleiß erfasst und die Reibungskupplungseinrichtung geöffnet wird.

Aufgabe der Erfindung ist es, die Verschleißnachstellung bei einer Reibungskupplungseinrichtung gemäß dem Oberbegriff des Anspruchs 1 zu erleichtern.

Die Aufgabe ist bei einer Reibungskupplungseinrichtung mit einer Druckplatte, die drehfest mit einem Gehäuse, insbesondere mit einem Kupplungsdeckel, verbunden und relativ zu dem Gehäuse mit Hilfe einer Betätigungseinrichtung, insbesondere einer Hebelfedereinrichtung, zum Öffnen und Schließen der Reibungskupplungseinrichtung axial begrenzt verlagerbar ist, und mit einer Verschleißnachstelleinrichtung, die zwischen der Betätigungseinrichtung und der Druckplatte wirksam wird, wenn Verschleiß erfasst und die Reibungskupplungseinrichtung geöffnet wird, dadurch gelöst, dass Abstützelemente für die Druckplatte so mit der Verschleißnachstelleinrichtung gekoppelt sind, dass die Betätigungseinrichtung beim Öffnen der Reibungskupplungseinrichtung von der Verschleißnachstelleinrichtung abhebt. Die Druckplatte wird auch als Anpressplatte bezeichnet. Zwischen der Druckplatte und einer Gegendruckplatte oder einer Gegendruckfläche, die zum Beispiel an einem Schwungrad vorgesehen ist, ist eine Kupplungsscheibe mit Reibbelägen einklemmbar. Durch die gemäß einem wesentlichen Aspekt der Erfindung von der Verschleißerfassung unabhängigen Abstützelemente kann eine der Verschleißnachstellung entgegenwirkende Klemmkraft reduziert werden. Eine solche Klemmkraft wird im geöffneten Zustand der Reibungskupplungseinrichtung von der Betätigungseinrichtung, insbesondere der Hebelfedereinrichtung oder Tellerfedereinrichtung, und einer Lösefedereinrichtung, insbesondere einer Blattfedereinrichtung mit mehreren Blattfedern, die bezogen auf die Drehachse der Reibungskupplungseinrichtung in axialer Richtung relativ zu dem Gehäuse vorgespannt ist, auf die Verschleißnachstelleinrichtung aufgebracht.

Ein bevorzugtes Ausführungsbeispiel der Reibungskupplungseinrichtung ist dadurch gekennzeichnet, dass die Abstützelemente jeweils eine Begrenzungseinrichtung aufweisen, die mit der Verschleißnachstelleinrichtung gekoppelt ist. Die vorzugsweise segmentartig ausgebildeten Abstützelemente sind einstückig mit den Begrenzungseinrichtungen verbunden und stellen ein separates Bauteil der Reibungskupplungseinrichtung dar.

Ein weiteres bevorzugtes Ausführungsbeispiel der Reibungskupplungseinrichtung ist dadurch gekennzeichnet, dass die Begrenzungseinrichtung eine erste Anlagefläche für die Verschleißnachstelleinrichtung aufweist, die von einer zweiten Anlagefläche für die Verschleißnachstelleinrichtung in Umfangsrichtung beabstandet ist. Die zweite Anlagefläche ist an einem Begrenzungsfederelement ausgebildet. Die Anlageflächen kommen an entsprechenden Anschlagflächen zur Anlage, die an der Verschleißnachstelleinrichtung vorgesehen sind. Durch den Abstand zwischen den Anschlagflächen wird die Größe der Nachstellbewegung der Verschleißnachstelleinrichtung festgelegt.

Ein weiteres bevorzugtes Ausführungsbeispiel der Reibungskupplungseinrichtung ist dadurch gekennzeichnet, dass die Verschleißnachstelleinrichtung mit einer Antriebsfedereinrichtung gekoppelt ist, die einen Rastfinger aufweist, der in eine Verzahnung der Verschleißnachstelleinrichtung eingreift und bei Verschleiß durch die Antriebsfedereinrichtung in Umfangsrichtung verstellt wird. Der mit der Verzahnung zusammenwirkende Rastfinger stellt eine Freilaufeinrichtung dar.

Ein weiteres bevorzugtes Ausführungsbeispiel der Reibungskupplungseinrichtung ist dadurch gekennzeichnet, dass die Begrenzungsfederelemente und die Antriebsfedereinrichtung so gestaltet und ausgelegt sind, dass beim Öffnen der mit Verschleiß behafteten Reibungskupplungseinrichtung von der Antriebsfedereinrichtung eine so große Kraft auf die Begrenzungseinrichtungen ausgeübt wird, dass die ersten und zweiten Anlageflächen der Begrenzungseinrichtungen aufeinander zu bewegt werden. Dadurch wird ein von den Begrenzungseinrichtungen begrenztes Nachstellen der Verschleißnachstelleinrichtung ermöglicht.

Ein weiteres bevorzugtes Ausführungsbeispiel der Reibungskupplungseinrichtung ist dadurch gekennzeichnet, dass die Begrenzungsfederelemente jeweils einen J-förmigen Federarm aufweisen, der von der zugehörigen Begrenzungseinrichtung ausgeht. An dem freien, geraden Ende des Federarms ist die zweite Anlagefläche ausgebildet.

Ein weiteres bevorzugtes Ausführungsbeispiel der Reibungskupplungseinrichtung ist dadurch gekennzeichnet, dass die Begrenzungseinrichtungen jeweils in ein Fenster eingreifen, das in der Verschleißnachstelleinrichtung ausgespart ist. Das Fenster weist die beiden einander zugewandten Anschlagflächen für die zugehörigen Anlageflächen der Begrenzungseinrichtungen auf.

Ein weiteres bevorzugtes Ausführungsbeispiel der Reibungskupplungseinrichtung ist dadurch gekennzeichnet, dass die Abstützelemente jeweils eine Rampe aufweisen, die an einer an der Druckplatte ausgebildeten Gegenrampe anliegt, die mit einer Nachstellrampe der Verschleißnachstelleinrichtung zusammenwirkt. Die Verschleißnachstelleinrichtung umfasst in einer bevorzugten Ausführungsform einen Nachstellring, der die Nachstellrampen aufweist und zur Verschleißnachstellung relativ zu der Druckplatte verdrehbar ist.

Ein weiteres bevorzugtes Ausführungsbeispiel der Reibungskupplungseinrichtung ist dadurch gekennzeichnet, dass die Abstützelemente jeweils eine Rampe aufweisen, die beim Öffnen der mit Verschleiß behafteten Reibungskupplungseinrichtung an einer an dem Kupplungsdeckel vorgesehenen Anschlageinrichtung zur Anlage kommt. Die Anschlageinrichtung begrenzt die Bewegung der Druckplatte beim Öffnen der mit Verschleiß behafteten Reibungskupplungseinrichtung.

Ein weiteres bevorzugtes Ausführungsbeispiel der Reibungskupplungseinrichtung ist dadurch gekennzeichnet, dass die Druckplatte mit Hilfe einer Lösefedereinrichtung, insbesondere einer Blattfedereinrichtung mit mehreren Blattfedern, bezogen auf die Drehachse der Reibungskupplungseinrichtung in axialer Richtung relativ zu dem Gehäuse vorgespannt ist. Die Vorspannkraft der Lösefedereinrichtung wirkt der von der Betätigungseinrichtung, insbesondere der Hebelfedereinrichtung oder Tellerfedereinrichtung, ausgeübten Federkraft im geöffneten Zustand der Reibungskupplungseinrichtung entgegen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine vereinfachte Darstellung einer Antriebsfeder in der Draufsicht;
- Figur 2: die Antriebsfeder aus Figur 1 im Querschnitt;
- Figur 3: eine schematische Darstellung einer Reibungskupplungseinrichtung mit einer Druckplatte und einer Verschleißnachstelleinrichtung;
- Figur 4: eine schematische Darstellung einer erfindungsgemäßen Reibungskupplungs einrichtung mit einer Druckplatte und einer Verschleißnachstelleinrichtung;
- Figur 5: ein erfindungsgemäßes Abstützelement mit einer Begrenzungseinrichtung in verschiedenen Ansichten;
- Figur 6: das Abstützelement mit der Begrenzungseinrichtung aus den Figuren 4 und 5 im eingebauten Zustand im Schnitt;
- Figur 7: eine Reibungskupplungseinrichtung mit einer erfindungsgemäßen Verschleißnachstelleinrichtung in teilweise geschnittener Darstellung im Neuzustand der Reibungskupplungseinrichtung;
- Figur 8: die Ansicht eines Schnitts entlang der Linie VIII-VIII in Figur 7;
- Figur 9: die Reibungskupplungseinrichtung aus Figur 7 im eingebauten Zustand bei aufgetretenem und erfasstem Verschleiß;
- Figur 10: die Ansicht eines Schnitts entlang der Linie X-X in Figur 9;
- Figur 11: die Reibungskupplungseinrichtung aus den Figuren 7 und 9 im ausgekuppelten Zustand beim Nachstellen;
- Figur 12: die Ansicht eines Schnitts entlang der Linie XII-XII aus Figur 11;
- Figur 13: die Reibungskupplungseinrichtung aus den Figuren 7, 9 und 11 im eingekuppelten Zustand nach einem Verschleißausgleich;
- Figur 14: die Ansicht eines Schnitts entlang der Linie XIV-XIV in Figur 13;
- Figuren 15 und 16: ein Abstützelement mit einer Begrenzungseinrichtung gemäß einem weiteren Ausführungsbeispiel in verschiedenen Ansichten;
- Figur 17: das Abstützelement mit der Begrenzungseinrichtung aus den Figuren 15 und 16 im eingebauten Zustand;
- Figur 18: eine Reibungskupplungseinrichtung mit einem Abstützelement und einer Begrenzungseinrichtung aus den Figuren 15 bis 17 im eingekuppelten Zustand und
- Figur 19: die Reibungskupplungseinrichtung aus Figur 18 im ausgekuppelten Zustand.

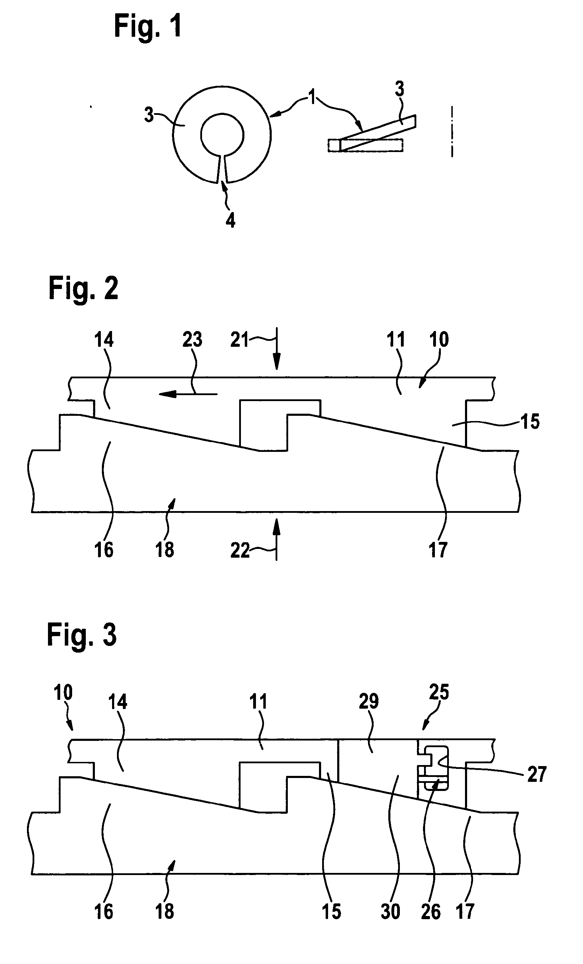

In den Figuren 1 und 2 ist eine Antriebsfeder 1 in verschiedenen Ansichten vereinfacht dargestellt. Die Antriebsfeder 1 weist einen tellerfederartigen kreisringscheibenförmigen Grundkörper 3, der mit einem radialen Schlitz 4 versehen ist. In Figur 2 ist die Antriebsfeder 1 mit Hilfe einer durchgezogenen Linie im aufgestellten Zustand und mit Hilfe einer gepunkteten Linie im durchgedrückten Zustand dargestellt. Durch die radial geschlitzte Ausführung ergibt es sich, dass sich der Außendurchmesser der aufgestellten Antriebsfeder 1 beim Durchdrücken vergrößert, das heißt das Spaltmaß des Schlitzes 4 wird größer. Dabei findet eine tangentiale Relativbewegung am Umfang statt, die zum Antreiben einer Verschleißnachstelleinrichtung genutzt werden kann. Das kann beispielsweise dadurch erfolgen, dass ein freies Ende der Antriebsfeder 1 drehfest mit einer eine Kupplungsdruckplatte der Reibungskupplungseinrichtung umfassenden Baugruppe verbunden ist. Das andere Ende der Antriebsfeder kann mittels einer Verzahnung mit der Verschleißnachstelleinrichtung gekoppelt sein.

In Figur 3 ist eine Verschleißnachstelleinrichtung 10 einer Reibungskupplungseinrichtung vereinfacht dargestellt. Die Verschleißnachstelleinrichtung 10 umfasst einen Nachstellring 11, der Rampen 14, 15 aufweist. Die Rampen 14, 15 des Nachstellrings 11 wirken mit Gegenrampen 16, 17 zusammen, die an einer Druckplatte 18 ausgebildet sind, die auch als Anpressplatte bezeichnet wird. Die Anpressplatte 18 ist auf eine (nicht dargestellte) Gegendruckplatte oder Gegendruckfläche zu bewegbar, die an einem Schwungrad vorgesehen sein kann. Zwischen der Druckplatte und der Gegendruckplatte ist eine (ebenfalls nicht dargestellte) Kupplungsscheibe mit Reibbelägen einklemmbar. Wenn an den Reibbelägen Belagverschleiß vorliegt, wird die Anpressplatte 18 weiter in Richtung Gegendruckplatte oder Schwungrad ausgelenkt als im Neuzustand. Dabei stellt sich eine zum Betätigen der Reibungskupplungseinrichtung verwendete Tellerfeder und somit auch die Antriebsfeder stärker auf als im Neuzustand. Dadurch wird der Umfang der Antriebsfeder und somit auch der Spalt oder Schlitz kleiner. Über die Zahnweite der Verzahnung kann festgelegt werden, bei welchem Maß an Verschleiß die Antriebsfeder in die nächste Verzahnung springen kann. Man spricht auch von einem weggesteuerten Verschleißsensor. Wenn die Verzahnung einen Zahn weiter gesprungen ist, dann wird der Nachstellring 11 beim nächsten Auskuppelvorgang durch das damit verbundene Nachdrücken der Antriebsfeder und der damit stattfindenden Umfangsvergrößerung verdreht. Dabei muss die Antriebsfeder den Nachstellring 11 gegen die auf den Nachstellring wirkende Klemmkraft verdreht werden.

In Figur 3 ist durch einen Pfeil 21 eine von der Betätigungseinrichtung oder Tellerfedereinrichtung auf den Nachstellring 11 wirkende Tellerfederkraft angedeutet. Durch einen Pfeil 22 ist eine in der entgegengesetzten Richtung auf die Druckplatte 18 wirkende Blattfederkraft angedeutet. Die Blattfederkraft 22 wird von (nicht dargestellten) Blattfedern bewirkt, mit deren Hilfe die Druckplatte 18 gegenüber dem Gehäuse der Reibungskupplungseinrichtung vorgespannt ist. Durch einen weiteren Pfeil 23 ist eine Nachstellkraft angedeutet, die zur Verschleißnachstellung auf den Nachstellring 11 aufgebracht werden muss. Durch die miteinander zusammenwirkenden Rampen wirkt die aus der Tellerfederkraft 21 und der Blattfederkraft 22 resultierende Gesamtkraft der Nachstellkraft 23 entgegen. Mit zunehmendem Belagverschleiß werden die Anpressplatte und die zugehörigen Blattfedern stärker ausgelenkt, wodurch die zu überwindende Klemmkraft ansteigt. Gemäß einem wesentlichen Aspekt der Erfindung wird die Klemmkraft reduziert beziehungsweise bis auf Null reduziert, um die Verschleißnachstellung zu erleichtern.

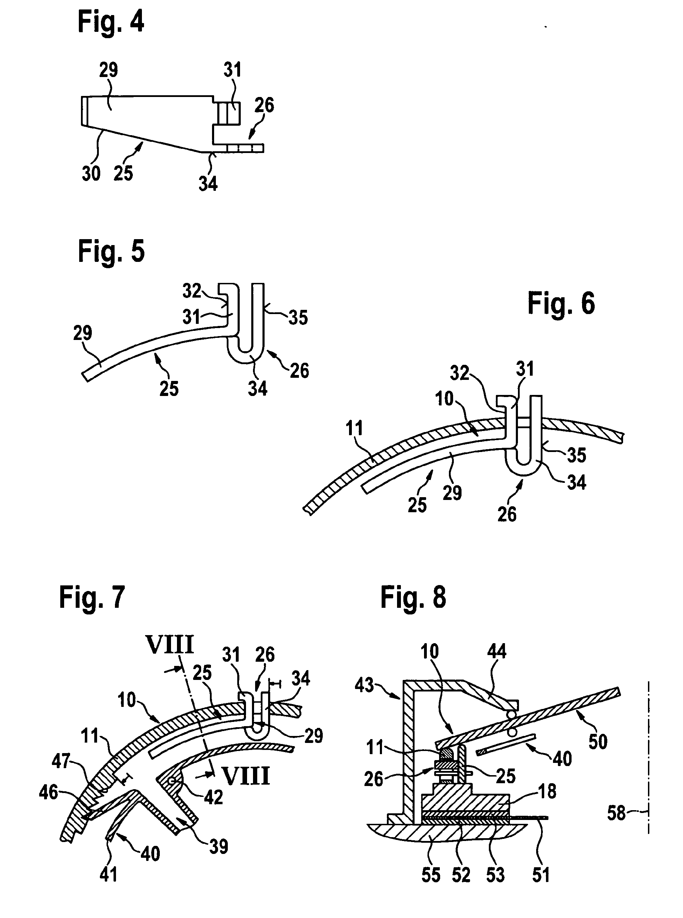

In den Figuren 4 bis 6 ist ein Abstützelement 25 dafür vorgesehen, die auf die Verschleißnachstelleinrichtung 10 wirkende Klemmkraft zu reduzieren. Das Abstützelement 25 ist einstückig mit einer Begrenzungseinrichtung 26 verbunden, die in ein Fenster 27 eingreift, das in dem Nachstellring 11 ausgespart ist. Mehrere gleichartig ausgebildete Abstützelemente, die dem Abstützelement 25 entsprechen, sind gleichmäßig über den Umfang des Stellrings 11 verteilt angeordnet. Die mit integrierter Begrenzungseinrichtung ausgestatteten Abstützelemente sind durch den Nachstellring 11 mitgeführt.

Jedes Abstützelement 25 umfasst einen Grundkörper 29, der mit einer Rampe 30 ausgestattet ist. Von dem Grundkörper 29 geht ein Federarm 31 aus, an dem eine erste Anlagefläche 32 vorgesehen ist, die an einem Innenrand des Fensters 27 anliegt. Des Weiteren geht von dem Grundkörper 29 ein zweiter Federarm 34 aus, der J-förmig gebogen und mit einer zweiten Anlagefläche 35 versehen ist, die von der ersten Anlagefläche 32 beabstandet ist. Die zweite Anlagefläche 35 liegt an dem gegenüberliegenden Innenrand des Fensters 27 des Nachstellrings 11 an.

In Figur 5 ist das Abstützelement 25 in verschiedenen Ansichten allein dargestellt. In Figur 6 ist das Abstützelement 25 in der gleichen Ansicht wie in Figur 5 unten im eingebauten Zustand dargestellt. In Figur 3 sieht man, dass die Rampe 30 des Abstützelements 25 an der gleichen Gegenrampe 17 der Druckplatte 18 anliegt, an der auch die Rampe 15 des Nachstellrings 11 anliegt.

In den Figuren 7 bis 14 ist das Funktionsprinzip des Abstützelements 25 mit der integrierten Begrenzungseinrichtung 26 in verschiedenen Ansichten und Zuständen der Reibungskupplungseinrichtung dargestellt. In den Figuren 7 bis 14 sieht man, dass der Nachstellring 11 mit einer einen radialen Schlitz 39 aufweisenden Antriebsfeder 40 zusammenwirkt. Die Antriebsfeder 40, die nach dem anhand der Figuren 1 und 2 beschriebenen Antriebsfederprinzip arbeitet, weist einen Grundkörper 41 auf, der mit einem freien Ende an einer Lagerstelle 42 mit der Tellerfeder 50 verbunden ist, die ihrerseits drehfest mit dem Kupplungsdeckel 44 verbunden ist. Die Kupplungsdruckplatte 18 ist über (nicht dargestellte) Blattfedern drehfest mit einem Gehäuse 43 verbunden, das einen Kupplungsdeckel 44 umfasst. Das andere freie Ende der Antriebsfeder 40 weist einen Rastfinger 46 auf, der in eine Verzahnung 47 eingreift, die radial innen an dem Nachstellring 11 ausgebildet ist.

Die Betätigung der Kupplungseinrichtung erfolgt durch eine Tellerfeder 50, die schwenkbar an dem Kupplungsdeckel 44 gelagert ist. Eine Kupplungsscheibe 51 mit Reibbelägen 52, 53 ist zwischen der Druckplatte 18 und einem Schwungrad 55 einklemmbar, das fest mit dem Gehäuse 43 verbunden ist. Die Drehachse der Kupplungseinrichtung ist mit 58 bezeichnet.

In den Figuren 7 und 8 ist die Kupplungseinrichtung im Neuzustand und eingekuppelt, das heißt geschlossen, dargestellt. Die beiden Federarme 31, 34 der Begrenzungseinrichtung 26 liegen beide an dem Nachstellring 11 an. Die Tellerfeder 50 liegt an dem Nachstellring 11 an.

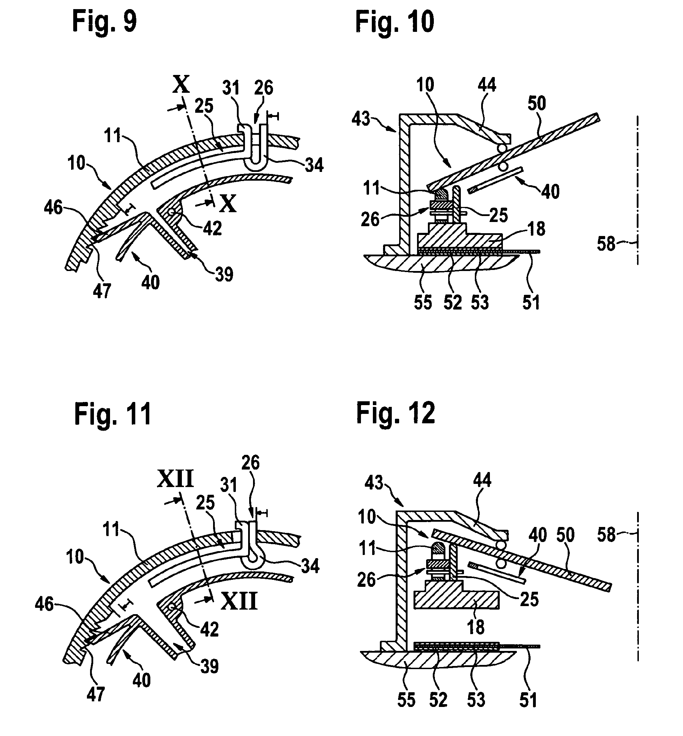

In den Figuren 9 und 10 ist Belagverschleiß aufgetreten. Die Kupplung befindet sich immer noch im eingekuppelten Zustand. Die Tellerfeder 50 und die Antriebsfeder 40 sind steiler aufgestellt als bei der in Figur 8 dargestellten Stellung. Die Tellerfeder 50 liegt immer noch auf dem Nachstellring 11 auf. Das weitere Aufstellen der Antriebsfeder 40 führt dazu, dass diese ihren Umfang verändert und der Schlitz 39, wie man in Figur 9 sieht, kleiner wird. Der Rastfinder 46 springt, gegenüber der in Figur 7 dargestellten Stellung, im Uhrzeigersinn einen Zahn weiter an der Verzahnung 47. Durch den aufgetretenen Belagverschleiß ist die Druckplatte 18 im eingekuppelten Zustand weiter in Richtung Schwungrad 55 ausgelenkt als im Neuzustand, wodurch die Tellerfeder 50 und die Antriebsfeder 40 steiler aufgestellt werden. Das hat zur Folge, dass der Umfang der Antriebsfeder 40 kleiner ist als im Neuzustand und der Rastfinger 46 der Antriebsfeder 40 im Uhrzeigersinn einen Zahn der Verzahnung 47 weiter springen kann. Der Nachstellring 11 ist durch die Vorspannkraft der Tellerfeder 50 geklemmt und kann sich nicht verdrehen.

In den Figuren 11 und 12 ist angedeutet, dass der Kraftfluss der Kupplung bei einem anschließenden Auskuppelvorgang oder Öffnungsvorgang umgelenkt und über das Abstützelement 25 geführt wird. Das Abstützelement 25 ist zwischen der Tellerfeder 50 und der Druckplatte 18 eingeklemmt und kann sich nicht verdrehen. Gleichzeitig ist die Tellerfeder 50 von dem Nachstellring 11 beabstandet, so dass dieser klemmkraftfrei wird. Dabei wird der Umfang der Antriebsfeder 40 durch den beim Auskuppelvorgang flacher werdenden Anstellwinkel wieder größer. Dadurch kann die Antriebsfeder 40 den Nachstellring 11 über den Rastfinger 46 und die Verzahnung 47 verdrehen. Dabei muss die Antriebsfeder 40 nur noch die verhältnismäßig geringe zur Verspannung des die Vortriebskraft erzeugenden Federarms 34 notwendige Kraft überwinden, der dabei gestaucht wird. Dabei löst sich der Federarm 31 von dem Nachstellring 11. Das Abstützelement 25 kann so ausgeführt werden, dass die Federarme 31 und 34 zur Anlage kommen. Bei den in den Figuren 3 bis 19 dargestellten Ausführungen des Abstützelements 25 muss dies jedoch nicht vorgesehen sein. Bei der vorliegenden Ausführung wird die Bewegung des Abstützelements 25 dadurch begrenzt, dass die Antriebsfeder 40 den Nachstellring 11 nur um eine Zahnweite der Verzahnung 47 vorwärtsbewegt.

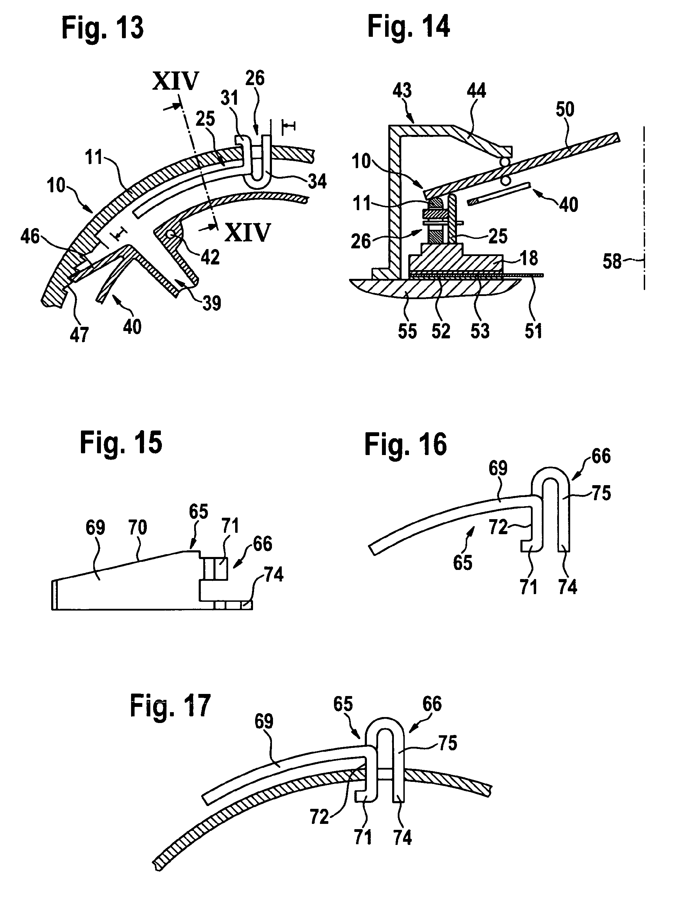

In den Figuren 13 und 14 sieht man, dass der Kraftfluss bei einem anschließenden Einkuppelvorgang wieder von dem Abstützelement 25 auf den Nachstellring 11 umgeleitet wird. Der Nachstellring 11 wird wieder zwischen der Tellerfeder 50 und der Druckplatte 18 eingeklemmt und kann sich nicht mehr verdrehen. Der Verschleiß ist kompensiert. Das Abstützelement 25 mit der Begrenzungseinrichtung 26 wird wieder klemmkraftfrei, so dass sich die beiden Federarme 31 und 34 voneinander lösen und an dem Nachstellring 11 zur Anlage kommen. Somit kann die Begrenzungseinrichtung 26 mit dem Abstützelement 25 dem Nachstellring 11 nachfolgen.

Zur Gewährleistung eines symmetrischen Kraftflusses sind vorzugsweise mehrere Abstützelemente über den Umfang des Nachstellrings 11 verteilt angeordnet. Die Lage des Abstützelements mit der Begrenzungseinrichtung ist hinsichtlich der Druckplattenanordnung angepasst. Bei gedrückten Kupplungen ist das Abstützelement mit der Begrenzungseinrichtung vorzugsweise innerhalb des Nachstellrings 11 angeordnet. Bei gezogenen Kupplungen ist das Abstützelement mit der Begrenzungseinrichtung vorzugsweise außerhalb des Nachstellrings 11 angeordnet, um ein Entlasten des Nachstellrings 11 im ausgekuppelten Zustand zu ermöglichen.

In den Figuren 15 und 16 ist ein Abstützelement 65 mit einer Begrenzungseinrichtung 66 gemäß einem weiteren Ausführungsbeispiel in verschiedenen Ansichten allein dargestellt. Das Abstützelement 65 umfasst einen Grundkörper 69 mit einer Rampe 70. Von dem Grundkörper 69 geht ein erster Federarm 71 mit einer ersten Anlagefläche 72 für den Nachstellring 11 aus. Des Weiteren geht von dem Grundkörper 69 ein zweiter Federarm 74 mit einer zweiten Anlagefläche 75 für den Nachstellring 11 aus. In Figur 17 ist das Abstützelement 65 mit der Begrenzungseinrichtung 66, in der gleichen Ansicht wie in Figur 16, im eingebauten Zustand dargestellt.

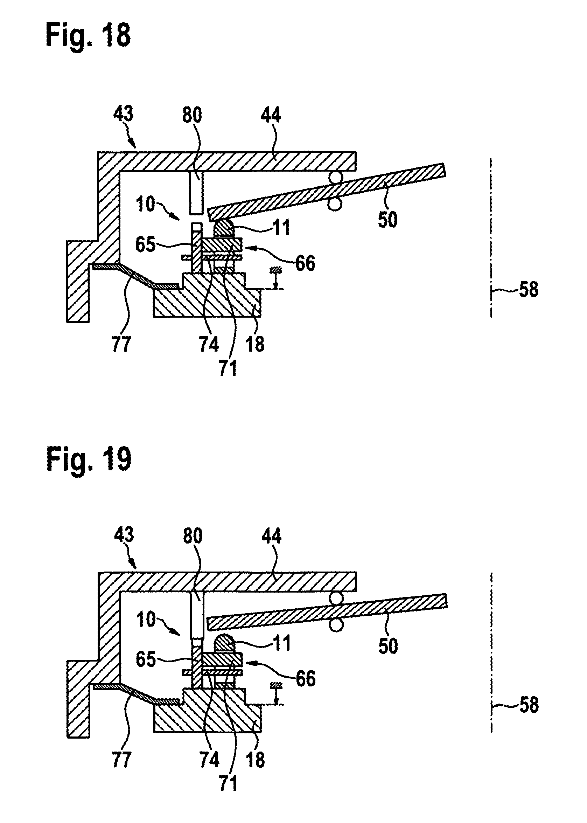

In Figur 18 ist eine ähnliche Darstellung wie in Figur 7 gemäß einem weiteren Ausführungsbeispiel mit der in den Figuren 15 bis 17 dargestellten Begrenzungseinrichtung 66 dargestellt. Die Anpressplatte 18 ist durch Blattfedern 77 zu dem Kupplungsdeckel 44 hin vorgespannt. Die Antriebsfeder (40 in Figur 7) ist in Figur 18 nicht dargestellt. An dem Kupplungsdeckel 44 ist eine Anschlageinrichtung 80 befestigt, die von dem Abstützelement 65 beabstandet ist. Durch die Anschlageinrichtung 80 wird der Anpressplattenweg beim Auskuppelvorgang begrenzt. Dadurch werden eine Klemmkraftreduzierung am Nachstellring 11 und eine vereinfachte Nachstellung ermöglicht.

In Figur 19 ist der ausgekuppelte Zustand der in Figur 18 dargestellten Kupplungseinrichtung dargestellt. Das Abstützelement 65 stößt an der Anschlageinrichtung an und bewirkt, dass sich die Anpressplatte oder Druckplatte 18 nicht weiter auf den Kupplungsdeckel 44 zu bewegen kann. Die Tellerfeder 50 bewegt sich weiter, so dass zwischen der Tellerfeder 50 und dem Nachstellring 11 ein Abstand oder ein Spiel freigegeben wird. Dadurch wird ein klemmkraftfreies Nachstellen ermöglicht.

Durch das vom Nachstellring 11 mitgeführte Abstützelement 25; 65 mit der Begrenzungseinrichtung 26; 66 kann die auf den Nachstellring 11 wirkende Kraft wirksam begrenzt beziehungsweise bis hin zum klemmkraftfreien Fall reduziert werden. Dadurch wird ein erleichtertes Bewegen des Nachstellrings 11 ermöglicht.

Die Antriebsfeder 40, die das Verdrehen des Nachstellrings 11 bewirkt, arbeitet vorzugsweise nach dem in der DE 10 2005 003 505 A1 beschriebenen Prinzip. Des Weiteren ist bei der erfindungsgemäßen Verschleißnachstelleinrichtung wie bei der DE 43 06 505 A1 ein Weg- beziehungsweise Verschleißsensor vorhanden, der die Verdrehung beziehungsweise den Nachstellweg des Nachstellrings 11 begrenzt.

### Bezugszeichenliste

- 1.: Antriebsfeder46. Rastfinger
- 3.: Grundkörper
- 4.: Schlitz
- 10.: Verschleißnachstelleinrichtung
- 11.: Nachstellring
- 14.: Rampe
- 15.: Rampe
- 16.: Gegenrampe
- 17.: Gegenrampe
- 18.: Druckplatte
- 21.: Pfeil
- 22.: Pfeil
- 23.: Pfeil
- 25.: Abstützelement
- 26.: Begrenzungseinrichtung
- 27.: Fenster
- 29.: Grundkörper
- 30.: Rampe
- 31.: erster Federarm
- 32.: erste Anlagefläche
- 34.: zweiter Federarm
- 35.: zweite Anlagefläche
- 39.: Schlitz
- 40.: Antriebsfeder
- 41.: Grundkörper
- 42.: Lagerstelle
- 43.: Gehäuse
- 44.: Kupplungsdeckel

- 47.: Verzahnung
- 50.: Tellerfeder
- 51.: Kupplungsscheibe
- 52.: Reibbelag
- 53.: Reibbelag
- 55.: Schwungrad
- 58.: Drehachse
- 65.: Abstützelement
- 66.: Begrenzungseinrichtung

- 69.: Grundkörper
- 70.: Rampe
- 71.: erster Federarm
- 72.: erste Anlagefläche
- 74.: zweiter Federarm
- 75.: zweite Anlagefläche
- 77.: Blattfedereinrichtung
- 80.: Anschlageinrichtung

## Patentansprüche

1. Reibungskupplungseinrichtung mit einer Druckplatte (18), die drehfest mit einem Gehäuse (43), insbesondere mit einem Kupplungsdeckel (44), verbunden und relativ zu dem Gehäuse (43) mit Hilfe einer Betätigungseinrichtung (50), insbesondere einer Hebelfedereinrichtung, zum Öffnen und Schließen der Reibungskupplungseinrichtung axial begrenzt verlagerbar ist, und mit einer Verschleißnachstelleinrichtung (10), die zwischen der Betätigungseinrichtung (50) und der Druckplatte (18) wirksam wird, wenn Verschleiß erfasst und die Reibungskupplungseinrichtung geöffnet wird, **dadurch gekennzeichnet, dass** Abstützelemente (25;65) für die Druckplatte (18) so mit der Verschleißnachstelleinrichtung (10) gekoppelt sind, dass die Betätigungseinrichtung (50) beim Öffnen der Reibungskupplungseinrichtung von der Verschleißnachstelleinrichtung (10) abhebt.

2. Reibungskupplungseinrichtung nach Anspruch 1, **dadurch gekennzeichnet, dass** die Abstützelemente (25;65) jeweils eine Begrenzungseinrichtung (26;66) aufweisen, die mit der Verschleißnachstelleinrichtung (10) gekoppelt ist.

3. Reibungskupplungseinrichtung nach Anspruch 2, **dadurch gekennzeichnet, dass** die Begrenzungseinrichtung (26;66) eine erste Anlagefläche (32;72) für die Verschleißnachstelleinrichtung (10) aufweist, die von einer zweiten Anlagefläche (35;75), die an einem Begrenzungsfederelement (34;74) ausgebildet ist, in Umfangsrichtung beabstandet ist.

4. Reibungskupplungseinrichtung nach Anspruch 3, **dadurch gekennzeichnet, dass** die Verschleißnachstelleinrichtung (10) mit einer Antriebsfedereinrichtung (40) gekoppelt ist, die einen Rastfinger (46) aufweist, der in eine Verzahnung (47) der Verschleißnachstelleinrichtung (10) eingreift und bei Verschleiß durch die Antriebsfedereinrichtung (40) in Umfangsrichtung verstellt wird.

5. Reibungskupplungseinrichtung nach Anspruch 4, **dadurch gekennzeichnet, dass** die Begrenzungsfederelemente (34;74) und die Antriebsfedereinrichtung (40) so gestaltet und ausgelegt sind, dass beim Öffnen der mit Verschleiß behafteten Reibungskupplungseinrichtung von der Antriebsfedereinrichtung (40) eine so große Kraft auf die Begrenzungseinrichtungen (26;66) ausgeübt wird, dass die ersten (32;72) und zweiten (35;75) Anlageflächen der Begrenzungseinrichtungen (26;66) aufeinander zu bewegt werden.

6. Reibungskupplungseinrichtung nach Anspruch 4 oder 5, **dadurch gekennzeichnet, dass** die Begrenzungsfederelemente (34;74) jeweils einen J-förmigen Federarm aufweisen, der von der zugehörigen Begrenzungseinrichtung (26;66) ausgeht.

7. Reibungskupplungseinrichtung nach einem der Ansprüche 4 bis 6, **dadurch gekennzeichnet, dass** die Begrenzungseinrichtungen (26;66) jeweils in ein Fenster (27) eingreifen, das in der Verschleißnachstelleinrichtung (10) ausgespart ist.

8. Reibungskupplungseinrichtung nach einem der vorhergehenden Ansprüche, **dadurch gekennzeichnet, dass** die Abstützelemente (25) jeweils eine Rampe (30) aufweisen, die an einer an der Druckplatte (18) ausgebildeten Gegenrampe (17) anliegt, die mit einer Nachstellrampe (15) der Verschleißnachstelleinrichtung (10) zusammenwirkt.

9. Reibungskupplungseinrichtung nach einem der Ansprüche 1 bis 7, **dadurch gekennzeichnet, dass** die Abstützelemente (65) jeweils eine Rampe (69) aufweisen, die beim Öffnen der mit Verschleiß behafteten Reibungskupplungseinrichtung an einer an dem Kupplungsdeckel (44) vorgesehenen Anschlageinrichtung (80) zur Anlage kommt.

10. Reibungskupplungseinrichtung nach einem der vorhergehenden Ansprüche, **dadurch gekennzeichnet, dass** die Druckplatte (18) mit Hilfe einer Lösefedereinrichtung, insbesondere einer Blattfedereinrichtung mit mehreren Blattfedern (77), bezogen auf die Drehachse der Reibungskupplungseinrichtung in axialer Richtung relativ zu dem Gehäuse (43) vorgespannt ist.
